# EUROPEAN PATENT APPLICATION

(11) **EP 4 086 042 A1**
(43) Date of publication of application: **09.11.2022**
(21) Application number: 22169363.3
(22) Date of filing: 22.04.2022
(51) Int. Cl.: B24C 3/00, B24C 7/00, B24C 1/04, B24C 5/02

(54) **SLAB CUTTING/MACHINING SYSTEM COMPRISING MEANS FOR DETECTING ABRASIVE MATERIAL**

(30) Priority: 07.05.2021 IT 202100011729
(71) Applicant: Sassomeccanica S.p.A., 63076 Monteprandone (AP) (IT)
(72) Inventor: CAROSELLI LEALI, Tommaso, 63074 San Benedetto del Tronto (AP) (IT)
(74) Representative: Baldi, Claudio

(57) **Abstract**

System (100) for a slab cutting machine comprising a nozzle (1) having a conduit (11), primary piping (2) crossed by liquid (L) under pressure and communicating with the conduit (11), secondary piping (3) crossed by an abrasive material (M) and communicating with the conduit (11), liquid conveying means (4) for forcedly transporting the liquid (L) towards the conduit (11) of the nozzle (1), feeding means (5) for transporting the abrasive material (M) towards the conduit (11) of the nozzle (1), and a dosing device (50) arranged in the secondary piping (3) downstream the feeding means for dosing the abrasive material in a final section (30) of the secondary piping; wherein the abrasive material (M) dosed by the dosing device (50) is sucked into the conduit (11) of the nozzle due to the Venturi effect; the system also comprises detection means (7) to detect a vacuum level in the final section (30) of the secondary piping (3).

## Description

The present patent application for industrial invention relates to a slab cutting/machining system comprising means for detecting abrasive material.

Machines for the cutting or machining of slabs are known in the art. In particular, there are cutting machines with rotary blades and cutting machines of water-jet type.

Considering that the main purpose of the present invention is to improve the current water-jet cutting technology, only water-jet cutting machines will be considered in the following description.

Water-jet cutting machines comprise a nozzle with an outlet hole from which a jet of liquid (preferably water) is delivered at very high pressure (3000-4000 bar) in order to engrave or cut a slab.

Compared to the blade cutting technology, the water-jet technology allows to obtain a more precise and easily oriented cut and to create extremely complex shapes. Furthermore, the water-jet cutting process is a cold cutting process and therefore it does not involve chemical-physical modifications and alterations of the material that is being cut.

Moreover, the water-jet cutting technology makes it possible to considerably speed up the machining of complex materials.

In order to cut the slabs optimally without damaging them, it is necessary to mix a correct amount of abrasive material with water. Sand or sand crystals are mainly used as abrasive material.

In recent years, water-jet cutting machines have undergone many innovations and new accessories have been developed to increase the efficiency of said machines.

Despite the continuous evolution of such a technology, some problems still persist.

In particular, an extremely severe problem is represented by the fact that it is not possible to know in real time whether or not there is abrasive material in the jet that is delivered from the nozzle. In fact, the absence of such abrasive material in the jet that is delivered from the nozzle would cause irreparable damage and defects on the slab, seriously impairing the quality of the final product.

In fact, an excessive amount of abrasive material is often supplied erroneously, clogging the feeding conduit of the abrasive material upstream the nozzle. As a result, no abrasive material enters the nozzle and the mixture delivered by the nozzle contains little or no abrasive material, causing damage and defects on the slab.

US201826624A1 discloses an abrasive jet apparatus having a nozzle from which a pressurized abrasive mixture is delivered for making grooves or holes in panels.

WO2021021947A1 discloses an abrasive material delivery system for use with liquid jet cutting systems having sensors and a processing device configured to determine the flow rate of the abrasive material.

US2014116217A1 discloses a high-pressure fluid jet system for delivering a high pressure fluid to cut materials.

It is an object of the present invention to overcome the drawback of the prior art by devising a system for the cutting or machining of slabs in which it is possible to detect a correct supply of abrasive material to the nozzle in order to eventually stop the cutting or machining of the slab, thus avoiding damage on the slab.

A further purpose of the present invention is to devise a machine for the cutting or machining of slabs that is equipped with the system according to the invention.

These purposes are achieved in accordance with the invention with the features listed in the appended independent claim 1.

Advantageous embodiments appear from the dependent claims.

The system according to the invention is defined by claim 1.

For the sake of explanatory clarity, the description of the system according to the invention is continued with reference to the accompanying drawings, which have only illustrative and non-limiting value, wherein:
Fig. 1 is a block diagram of the system according to the invention;
Fig. 2 is a perspective view illustrating a slab cutting or machining machine comprising the system according to the invention;
Fig. 3 is a screenshot of a display of a nozzle assembly illustrating a vacuum signal as a function of time relative to a vacuum in secondary piping of the system and two threshold values, wherein the first threshold value is set; and
Fig. 4 is a screenshot just like Fig. 3, illustrating another vacuum signal, in which the second threshold value is set.

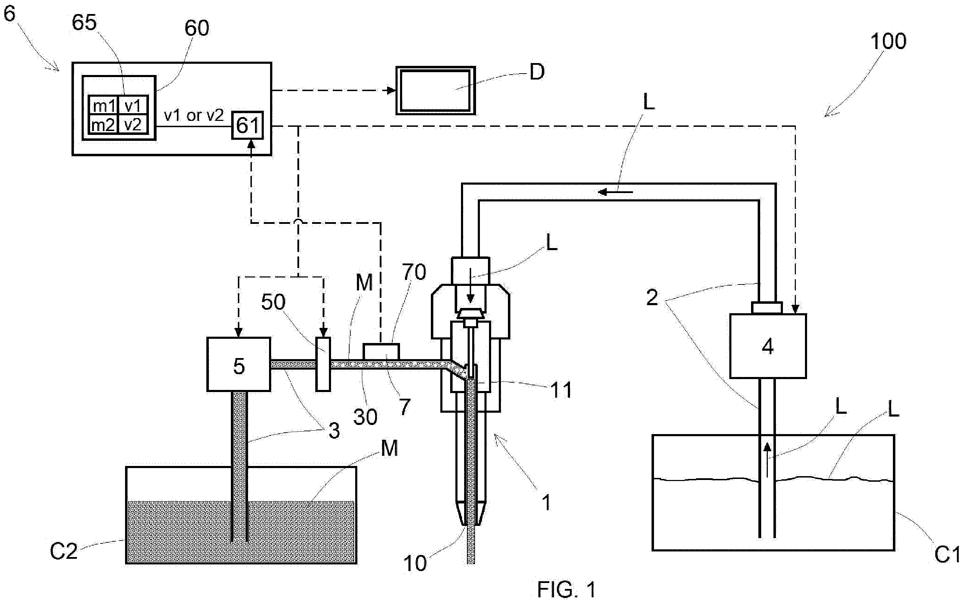

With reference to Fig. 1, a system according to the invention is described, which is generally indicated with reference numeral 100.

The system (100) comprises a nozzle (1) having a conduit (11) with an outlet hole (10).

The system (100) comprises primary piping (2) suitable for being crossed by a liquid (L) under pressure. The primary piping (2) communicates with the conduit (11) of the nozzle (1) in order to discharge the liquid (L) inside the conduit (11) of the nozzle (1).

Preferably, the liquid (L) used for cutting slabs consists of water.

The system (100) further comprises secondary piping (3) suitable for being crossed by an abrasive material (M). The secondary piping (3) communicates with the conduit (11) of the nozzle (1) in such a way that the liquid (L) and the abrasive material (M) are mixed inside the conduit (11). In view of the above, a mixture of liquid (L) and abrasive material (M) is delivered from the outlet hole (10) of the nozzle (1).

The abrasive material (M) preferably consists of sand or sand crystals. Therefore the mixture that comes out of the outlet hole (10) is a mixture of water and sand.

Liquid conveying means (4) are arranged in the primary piping (2). The liquid conveying means (4) are suitable for taking the liquid (L) from a reservoir (C1) and forcedly convey said liquid (L) into the primary piping (2) towards the conduit (11) of the nozzle (1). By way of example, the liquid conveying means (4) consist of a conventional high-pressure pump.

Feeding means (5) are arranged in the secondary piping (3). The feeding means (5) are suitable for taking the abrasive material (M) from a reservoir (C2) and forcedly convey said abrasive material (M) into the secondary piping (3). The feeding means may be an ordinary feeder of granular material.

A dosing device (50) is arranged in the secondary piping (3) downstream the feeding means. The dosing device (50) doses the amount of abrasive material to be passed into a final section (30) of the secondary piping downstream the dosing device (50). The abrasive material (M) in the final section (30) of the secondary piping is sucked into the conduit (11) of the nozzle due to the Venturi effect. In fact, the flow of liquid in the conduit (11) of the nozzle creates a depression in the final section (30) of the secondary piping that sucks the abrasive material (M) into the conduit (11) of the nozzle. Said dosing device (50) is preferably a peristaltic dosing device (50).

The applicant has noted that if the dosing device (50) doses too much abrasive material (M), the abrasive material (M) in the final section (30) is clogged and therefore the depression decreases (i.e. the pressure increases) in the final section (30) and the abrasive material is no longer sucked into the conduit (11) of the nozzle due to the Venturi effect and no more abrasive material, but only liquid, is delivered from the nozzle.

The applicant has discovered that in order to ensure a proper suction of abrasive material caused by the Venturi effect from the final section (30) of the secondary piping to the conduit (11) of the nozzle, the depression (vacuum level) in the final section (30) of the secondary piping must be higher than a threshold depression.

The system (100) comprises a control unit (6) operatively connected to the liquid conveying means (4) and to the feeding means (5) and to the dosing device (50) of the abrasive material. The connection of the control unit (6) to the conveying means (4), to the feeding means (5) and to the dosing device (50) can be made either electrically by means of cables and electrical wiring, or wirelessly by means of antennas that are coupled together.

The peculiarity of the system (100) according to the invention is that it comprises detection means (7) arranged in the final section (30) of the secondary piping (3), which are suitable for detecting a depression value (vacuum or pressure less than 1 atmosphere) inside the final section (30) of the secondary piping (3).

The control unit (6) is configured in such a way as to stop the conveying means (4), the feeding means (5) and the dosing device (50) according to the vacuum detected by the detection means (7).

The detection means (7) detect the depression value. The control unit (6) determines whether this parameter is abnormal or not. If the parameter is judged to be abnormal, the control unit (6) immediately stops the conveying means (4), the feeding means (5) and the dosing device (50) in such a way to prevent damages to the slab that is being cut due to the absence of the abrasive material (M).

The detection means (7) comprise a pressure transducer (70) configured to detect the depression in the final section (30) of the secondary piping (3) and convert said depression value into an electrical vacuum value (p).

In fact, the applicant has ascertained that the depression decreases inside the final section (30) of the secondary piping (3) when the final section (30) of the secondary piping (3) is clogged.

Since the pressure transducer (70) is used to measure a depression relative to the atmospheric pressure (vacuum level), then the pressure transducer (70) is preferably a vacuum switch.

If the final section (30) of the secondary piping (3) is clogged with abrasive material (M), the depression value detected by the pressure transducer (70) will be lower than the value detected when a regular flow of abrasive material (M) flows in the final section (30) of the secondary piping towards the conduit (11) of the nozzle. Otherwise said, when the final section (30) of the secondary piping is not clogged and the abrasive material flows regularly, there is a higher vacuum level compared to the situation when said final section is clogged.

Precisely due to the fact that the depression in the final section (30) of the secondary piping (3) varies depending on whether said final section is clogged or not, the applicant has performed experimental tests and has found at least one threshold depression value (v1, v2) that indicates whether the abrasive material is correctly flowing in the final section (30) of the secondary piping or said final section of the secondary piping is clogged.

The at least one threshold value (v1, v2) is stored in a memory (60) of the control unit (6).

The control unit (6) further comprises a comparator (61) to compare the electrical vacuum value (p) detected by the pressure transducer (70) with the at least one threshold value (v1, v2).

The control unit (6) is configured in such a way as to stop the conveying means (4), the feeding means (5) and the dosing device (50) when the electrical vacuum value (p) is lower than the at least one threshold value (v1, v2).

Water-jet cutting can be performed in two operating modes (m1, m2): a first operating mode (m1) at low pressure and a second operating mode (m2) at high pressure. The first operating mode (m1) is performed at the beginning of the process to break through the material such an operation is carried out in an area of the material that will be wasted, and in any case very close to the area where the cutting is started. The second operating mode (m2) is performed during the actual cutting process. For this reason, two different threshold values (v1, v2) will be required. A first threshold value (v1) is used during the first operating mode (m1) and a second threshold value (v2) is used during the second operating mode (m2). Obviously, the second threshold value (v2) must be at a higher vacuum level than the first threshold value (v1).

The two operating modes (m1, m2) differ in the suction power imparted to the liquid conveying means (4). Therefore, the control unit (6) is configured in such a way as to regulate such a suction power of the liquid conveying means (4), so that the system (100) can be set alternately in the two operating modes (m1, m2).

Since the system (100) can operate in two operating modes (m1, m2), then two threshold values (v1, v2) of the vacuum level are required in order to identify a correct flow of the abrasive material in the final section (30) of the secondary piping.

In this regard, the memory (60) comprises a table (65) with a correspondence between the operating mode (m1, m2) of the system (100) and the corresponding threshold value (v1, v2).

The comparator (61) is configured to compare the electrical vacuum value (p) with the threshold value (v1, v2) corresponding to the selected operating mode (m1, m2).

By way of example, if the system (100) operates in the first operating mode (m1), the comparator (61) will compare the electrical vacuum value (p) with the first threshold value (v1). Conversely, if the system (100) operates in the second operating mode (m2), the comparator (61) will compare the vacuum electrical value (p) with the second threshold value (v2).

Preferably, the system (100) comprises a display (D) operatively connected to the control unit (6).

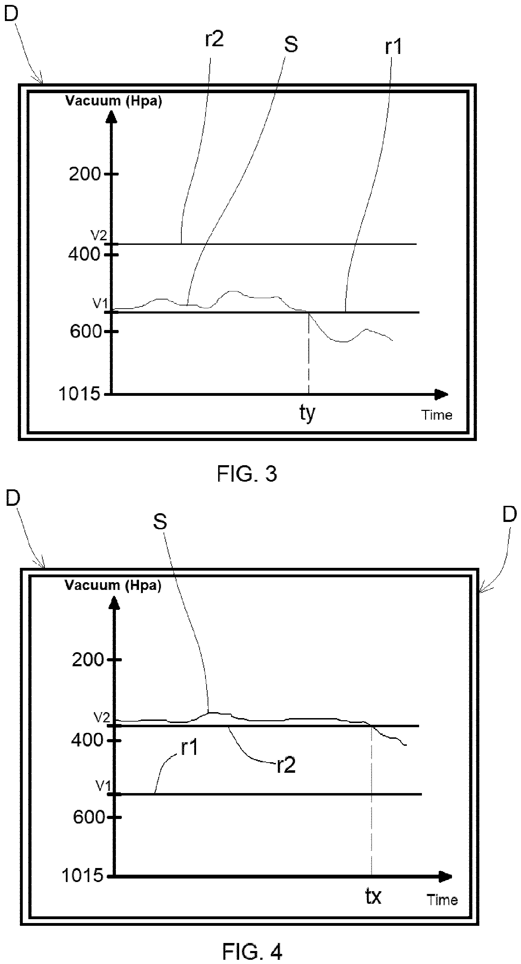

With reference to Figs. 3 and 4, the control unit (6) is configured to display on the screen (D):
- a Cartesian diagram with time as abscissae and vacuum level as ordinates going from the atmospheric pressure (1015 hPa) to an average vacuum of 200 hPa.
- two straight lines (r1, r2), wherein each straight line indicates one of the two threshold values (v1, v2); and
- a signal (S) represented by the interpolation of the electrical vacuum values (p) measured over time by the pressure transducer (70).

By way of example, Fig. 3 shows the signal (S) that interpolates the electrical vacuum values (p) generated by the pressure transducer (70), when the system (100) is set in the first operating mode (m1).

Again with reference to Fig. 3, the signal (S) falls below the first threshold value (v1) at the time value "ty". This indicates that there is no longer a regular flow of abrasive material inside the final section (30) of the secondary piping (3), with the risk of clogging the final section (30) of the secondary piping (3) and therefore the control unit (6) will immediately stop the conveying means (4), the feeding means (5) and the dosing device (50) to prevent the clogging of the final section (30) of the secondary piping (3), which would result in no abrasive material flowing into the conduit (11) of the nozzle and would consequently damage the slab that is being machined.

By way of example, Fig. 4 shows the signal (S) that interpolates the electrical vacuum values (p) generated by the pressure transducer (70) when the system (100) is set to the second operating mode (m1).

Again with reference to Fig. 4, the signal (S) falls below the second threshold value (v2) at the time value "tx". This indicates that there is no longer a regular flow of abrasive material inside the final section (30) of the secondary piping (3), with the risk of clogging the final section (30) of the secondary piping (3) and therefore the control unit (6) will immediately stop the conveying means (4), the feeding means (5) and the dosing device (50) in order to prevent the clogging of the final section (30) of the secondary piping (3), which would result in no abrasive material flowing into the conduit (11) of the nozzle and would consequently damage the slab that is being machined.

Although only two operating modes (m1, m2) of the system (100) have been defined in the foregoing description, it is understood that the system (100) can operate in any number of modes. In such a case, a number of threshold values equal to the number of operating modes of the system (100) will be stored in the table (65) of the memory (60).

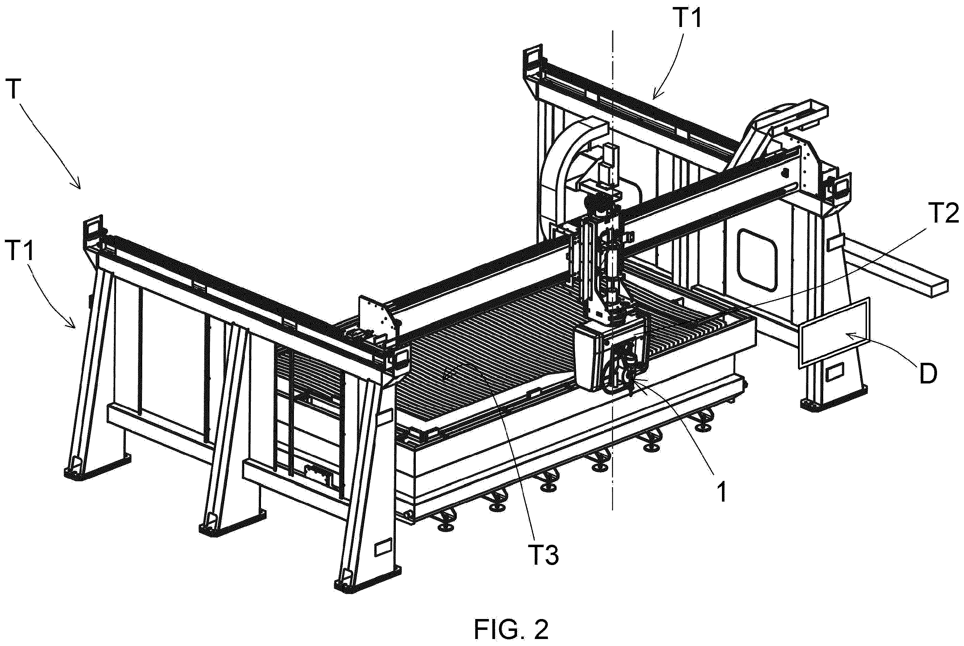

With reference to Fig. 2, a further object of the present invention is a slab cutting or machining machine (T) comprising:
- a support frame (T1)
- an operating head (T2) connected to the support frame (T1);
- a system (100) as described above, having the nozzle (1) mounted on the operating head (T2);
- a worktop (T3) arranged below the operating head and suitable for supporting the slab to be machined; and
- handling means connected to the operating head (T2) or to the worktop (T3) for moving the operating head (T2) or the worktop (T3).

It should be noted that the structure of the machine (T) shown in Fig. 2 is only shown for an illustrative, non-exclusive purpose.

In the machine (T) shown in Fig. 2, the support frame (T1) comprises two side frames, whereas said handling means comprise an upper beam that is slidingly mounted on the side frames, a carriage that is slidingly mounted on the beam, and a mobile upright that is mounted in up-down configuration with respect to the carriage.

As already mentioned, the cutting machine (M) illustrated in Fig. 2 is only an example of the cutting machine (M) that can be equipped with the system (100) according to the invention. For example, the slab cutting or machining machine (T) may comprise a three-axis robot, a mixed robot with linear and rotary axes, or an anthropomorphic robot as handling means.

Additionally, the machine (T) may be of the type with fixed operating head (T2) and movable worktop (T3). In such a case, the handling means will be connected to the worktop to allow its movement along three orthogonal axes.

A method for controlling and managing the system (100) according to the invention is described below.

Firstly, the method provides for activating the liquid conveying means (4), the feeding means (5) and the dosing device (50).

During the cutting or machining operation implemented by means of the system (100), a depression value (vacuum or pressure less than 1 atmosphere) is detected inside the final section (30) of the secondary piping (3) by means of the detection means (7).

If the vacuum or depression value is abnormal, this means that the final section (30) is clogged and so the liquid conveying means (6), the feeding means and the dosing device (50) are immediately stopped by the control unit (6).

Going into detail and referring to the particular embodiment shown in the attached figures, such vacuum or depression detection in the final section (30) consists in measuring the depression inside the final section (30) and converting said depression value into an electrical vacuum value (p) by means of the pressure transducer (70) of the detection means (7).

The electrical vacuum value (p) generated by the pressure transducer (70) is sent to the control unit (6), which compares it with one of said threshold values (v1, v2) by means of said comparator (61), depending on the operating mode (m1, or m2) of the system (100).

If said comparison shows that the electrical vacuum value (p) is lower than the threshold value (v1, v2), the system (100) is immediately stopped.

As a result of the above description, the advantages of the present invention are now evident.

Having equipped the system (100) according to the invention with the pressure detection means, it is possible to check whether the abrasive material (M) is flowing adequately inside the final section (30) of the secondary piping (3) or whether the final section (30) is clogged and, if necessary, it is possible to stop the cutting or machining of the slab, thus preventing damage and production waste.

Numerous variations and detailed modifications may be made to the present embodiment of the invention, which are within the skills of an expert of the field, falling within the scope of the invention as expressed by the appended claims.

## Claims

1. System (100) for a slab cutting or machining machine (T) comprising:
- a nozzle (1) having a conduit (11) with an outlet hole (10);
- primary piping (2) suitable for being crossed by a liquid (L) under pressure and communicating with the conduit (11) of the nozzle (1) in order to deliver the liquid (L) into the conduit (11) of the nozzle (1);
- secondary piping (3) suitable for being crossed by an abrasive material (M) and communicating with the conduit (11) of the nozzle (1) in such a way that said liquid (L) and said abrasive material (M) are mixed inside the conduit (11), and a mixture composed of liquid (L) and abrasive material (M) is delivered from the outlet hole (10) of the nozzle (1);
- liquid conveying means (4) suitable for taking the liquid (L) from a reservoir (C1) and convey said liquid (L) forcedly in the primary piping (2) towards the conduit (11) of the nozzle (1);
- feeding means (5) for taking said abrasive material (M) from a reservoir (C2) and conveying said abrasive material (M) in the secondary piping (3);
- a dosing device (50) arranged in the secondary piping (3) downstream the supply means for dosing the abrasive material (M) in a final section (30) of the secondary piping (3) wherein the abrasive material (M) is sucked into the conduit (11) of the nozzle due to the Venturi effect;
- a control unit (6) operatively connected to the liquid conveying means (4), to the feeding means (5) and to the dosing device (50) of the abrasive material; said control unit (6) being configured in such a way as to control the activation and deactivation of the liquid conveying means (4), of the feeding means (5) and of the dosing device (50);
- detection means (7) operatively connected to the control unit (6);
**characterized in that**:
- said detection means (7) are arranged in the final section (30) of the secondary piping (3) and said detection means (7) comprise a pressure transducer (70) configured to detect a depression or vacuum level in the final section (30) of the secondary piping and convert said vacuum level into an electrical vacuum value (p);
- said control unit (6) is configured in such a way as to stop or not the liquid conveying means (4), the feeding means (5) and the dosing device (50) according to said electrical vacuum value (p) detected by the pressure transducer (70);
wherein said control unit (6) comprises a memory (60) wherein said at least one threshold value (v1, v2) of the vacuum level is stored; said control unit (6) comprising a comparator (61) to compare said electrical vacuum value (p) with said at least threshold value (v1, v2); said control unit (6) being configured in such a way as to stop said conveying means (4, 5) when the electrical vacuum value (p) is lower than said at least one threshold value (v1, v2).

2. The system (100) according to claim 1, wherein said control unit (6) is configured to adjust the suction power of said liquid conveying means (4) in such a way that said system (100) operates in at least two operating modes (m1, m2); wherein said memory (60) stores a table (65) with a correspondence between the operating mode (m1, m2) of the system (100) and the corresponding threshold value (v1, v2); said comparator (61) being configured in such a way as to compare the threshold value (v1, v2) corresponding to the operating mode (m1, m2) of the system (100) with the electrical vacuum value (p) detected by the pressure transducer (70).

3. The system (100) according to claim 1 or 2, comprising a display (D) operatively connected with said control unit (6); said control unit (6) being configured in such a way that the display (D) shows:
- at least one straight line (r1, r2) indicating the at least one threshold value (v1, v2); and
- a signal (S) composed of the interpolation of the electrical vacuum values (p) detected over time by the pressure transducer (70).

4. Machine (T) for the cutting or machining of slabs comprising:
- a support frame (T1)
- an operating head (T2) mounted on the support frame (T1);
- a system (100) according to any one of the preceding claims, wherein said nozzle (1) is mounted on said operating head (T2);
- a worktop (T3) for supporting the slab to be machined;
- handling means connected to said operating head (T2) or to said worktop (T3) for handling said operating head (T2) or said worktop (T3).

5. Method for controlling and managing the cutting or machining of a slab comprising the following steps:
- activating the liquid conveying means (4) for conveying a liquid (L) through primary piping (2) into a conduit (11) of a nozzle (1);
- activating the feeding means (5) to convey an abrasive material (M) in secondary piping (3);
- activating a dosing device (50) of abrasive material (M) arranged downstream the feeding means (5); said dosing device (50) dosing the abrasive material into a final section (30) of the secondary piping (3) where the abrasive material (M) is sucked into the conduit (11) of the nozzle due to the Venturi effect;
- detecting a flow of abrasive material (M) inside the secondary piping (3) by means of the detection means (7);
- stopping the conveying means (4), the feeding means (5) and the dosing device (50) when the flow is abnormal
**characterized by** the fact that:
the detection means (7) comprise a pressure transducer (70);
wherein said step of detecting the flow of abrasive material (M) comprises:
- detecting the depression or vacuum in the final section (30) of the secondary piping (3) and converting it into an electrical vacuum value (p) by means of the pressure transducer (70);
- comparing the electrical vacuum value (p) with at least one threshold value (v1, v2) with a comparator (61);
- stopping the conveying means (4), the feeding means (5) and the dosing device (50) when the electrical vacuum value (p) is lower than at least one threshold value (v1, v2).
